# EUROPEAN PATENT SPECIFICATION

(11) **EP 0 508 648 B1**
(45) Date of publication and mention of the grant of the patent: **22.10.1997**
(21) Application number: 92302559.7
(22) Date of filing: 25.03.1992
(51) Int. Cl.: C08G 18/00, C08J 9/14

(54) **Manufacture of cellular polymers and compositions therefor**
Herstellung zellularer Polymere und ihre Zusammensetzung
Préparation de polymères cellulaires et leur composition

(30) Priority: 03.04.1991 GB 9106967; 12.06.1991 GB 9112622; 16.08.1991 GB 9117749; 01.11.1991 GB 9123205; 24.12.1991 GB 9127335
(43) Date of publication of application: 14.10.1992
(73) Proprietor: IMPERIAL CHEMICAL INDUSTRIES PLC, London SW1P 3JF (GB)
(72) Inventor: de Vos, Rik, B-3110 Rotselaar (BE); Leenslag, Jan Willem, B-3120 Tremelo (BE)
(74) Representative: Baken, Philippus Johannes L. H.

(56) References cited:
- EP-A- 0 355 713
- EP-A- 0 405 439
- US-A- 4 491 879
- DATABASE JAPS; & JP-A-3 000 743 (ASAHI GLASS) 07-01-1991

## Description

The present invention is concerned with a novel polyisocyanate composition, a novel polyol composition, a novel process for preparing a flexible foam, an integral skin foam or a microcellular elastomer and the use of a special class of liquids in preparing such foams and elastomers.

Such foams and elastomers in general are made by reacting an appropriate polyisocyanate and isocyanate-reactive composition in the presence of a blowing agent. One of the blowing agents most widely used has been trichloro-fluoromethane (CFC-11) due to its favourable combination of properties.

Recently it was found that chlorofluorocarbon blowing agents, like CFC-11, might deplete the ozone layer around the earth. Because of this concern it was agreed internationally to aim at phasing out the production and use of such ozone depleting compounds as soon as possible. Therefore there is a need to find an alternative which on the one hand is environmentally more acceptable and which on the other hand does not influence the properties of such foam or elastomer in a negative way.

Surprisingly, we have found that by using a special class of liquids in preparing the above foams and elastomers, a material may be obtained having improved properties.

Consequently, the present invention is concerned with a method for the preparation of a flexible foam, an integral skin foam or a microcellular elastomer by reacting an organic polyisocyanate and an isocyanate-reactive composition comprising at least one isocyanate-reactive compound having a molecular weight of 1000 to 10000 and a functionality of 2 to 4 in the presence of a blowing agent, characterised in that the reaction is conducted in the presence of an inert, insoluble, organic liquid which has a boiling point of at least 60°C at 1 bar and which is a fluorinated compound selected from the group consisting of fluorinated hydrocarbons, fluorinated ethers, fluorinated tertiary amines, fluorinated amino-ethers and fluorinated sulfones and wherein at least 75% of the hydrogen atoms have been replaced by fluorine atoms wherein:
- "Inert" is defined as "showing no reactivity towards the other ingredients of the reaction mixture and especially towards isocyanate-reactive compositions and polyisocyanates, under storage and reaction conditions";
- "Insoluble" is defined as "showing a solubility in the isocyanate-reactive composition and the polyisocyanate of less than 500 ppm by weight at 25°C and 1 bar"; and
- "Liquid" is defined as "liquid under foam-forming conditions and preferably at ambient conditions".

The inert, insoluble, organic liquid can be combined with the polyisocyanate and/or with the polyol before the polyisocyanate and the polyol are combined to form the foam or the elastomer. Therefore the present invention is further concerned with an isocyanate-reactive composition comprising:
a) at least one isocyanate-reactive compound of molecular weight of 1000 to 10000 and of functionality of 2 to 4, and
b) the above inert, insoluble, organic liquid
and with a polyisocyanate composition having an isocyanate number average functionality of 2 to below 2.4 and comprising the above inert, insoluble, organic liquid.

US 4,981,879 discloses the use of perfluorinated hydrocarbons for improving the cell structire and insulating efficiency of rigid foams.

EP 355713 discloses the use of relatively high boiling compounds, like 1,1,1-trichloroethane, for the preparation of closed-cell foams and does not disclose the above insoluble fluorinated compounds.

EP-407023 is disclosing the use of 1,1,1-trichloroethane in flexible foams.

GB 1589562 discloses the use of a high boiling, inert, immiscible liquid compound in making elastomers. Suitable compounds are hydrocarbon oils and they are used as carriers for other additives, as absorbers of the reaction heat, to improve mould release, to reduce shrinkage and to improve energy absorption and fire resistance.

The inert, insoluble, organic liquid having a boiling point of at least 60°C and preferably at least 75°C at 1 bar is selected from the group consisting of fluorinated hydrocarbons, fluorinated ethers, fluorinated tertiary amines, fluorinated amino-ethers and fluorinated sulfones.

"A fluorinated compound" as mentioned above and hereinafter is defined as "a compound wherein at least 75% and preferably at least 90% and most preferably at least 99% of the hydrogen atoms have been replaced by fluorine atoms. This definition is only related to fluorinated inert, insoluble, organic liquids having a boiling point of at least 60°C at 1 bar.

The fluorinated hydrocarbons in general have at least 7 carbon atoms. They may be cyclic or non-cyclic, aromatic or aliphatic and saturated or unsatured. Examples of fluorinated hydrocarbons are the fluorinated versions of norbornadiene, decaline, dimethylcyclohexane, methylcyclohexane, 1-methyl decaline, phenantrene, heptane, octane, nonane and cyclooctane.

The fluorinated ethers may be cyclic or acyclic and include for instance fluorinated propyltetrahydrofuran and fluorinated butyltetrahydrofuran. Suitable commercially available fluorinated ethers include Galden HT 100, HT 200, HT 230, HT 250 and HT 270 all from Montefluos SpA (Galden is a trade mark) which are fluorinated polyethers.

The fluorinated amines include the fluorinated versions of trimethylamine, triethylamine, ethyldimethylamine, methyl diethylamine, tripropylamine, tributylamine, tripentylamine, N-alkylpiperidines like N-methylpiperidine.

Examples of fluorinated sulfones are CF₃SO₂CF₃ and CF₃SO₂CF₂CF₃.

Examples of suitable fluorinated amino-ethers include fluorinated N-alkyl(C₂₋₆)morpholine like N-ethyl- and N-isopropyl morpholine.

Fluorinated and perfluorinated compounds have been proposed in the prior art as an ingredient for preparing foams. US 4972002 discloses the use of low boiling fluorinated hydrocarbons for preparing foams. EP 405439 is disclosing the use of perfluorinated ethers and hydrocarbons as inflating agents for preparing rigid foams. US 4981879 discloses the use of perfluorinated hydrocarbons having a boiling point of less than 215°C for preparing rigid foams.

The inert, insoluble, organic liquid generally is used in an amount of 0.05-10 parts by weight (pbw) per 100 pbw of polyisocyanate or per 100 pbw of isocyanate-reactive composition. The amount on the whole reaction reaction mixture in general will be 0.02-5 pbw per 100 pbw of foam forming reaction system. Before the polyisocyanate and the isocyante-reactive composition are combined the inert, insoluble, organic liquid is combined with the isocyanate-reactive composition or the polyisocyanate using the above indicated amount. The mixing is conducted under high shear mixing conditions. Alternatively the inert, insoluble, organic liquid is supplied to the foam forming mixture independently from the isocyanate-reactive composition and the polyisocyanate.

The reaction between the isocyanate-reactive composition and the polyisocyanate is conducted in the presence of a blowing agent. The blowing agent preferably is combined with the polyisocyanate or the isocyanate-reactive composition before they are combined to form the foam or elastomer. Therefore the present invention is also concerned with polyisocyanate and isocyanate-reactive compositions comprising an inert, insoluble, organic liquid having a boiling point of at least 60°C at 1 bar and a blowing agent. Alternatively the blowing agent is supplied to the foam forming mixture in admixture with the isocyanate-reactive composition while the inert, insoluble, organic liquid is supplied to the foam forming mixture together with the polyisocyanate or the other way around. Further the blowing agent can be supplied to the foam forming mixture independently from the polyisocyanate and the isocyanate-reactive composition but together with the inert, insoluble, organic liquid.

The amount of blowing agent used will depend on the type of blowing agent and on the desired density and can be determined easily by those skilled in the art. In general the amount of blowing agent will be 1-15 pbw per 100 pbw of reaction system; this includes physical blowing agent and water. The amount of blowing agent in the polyisocyanate and the isocyanate-reactive composition may range from 2-30 pbw per 100 pbw of polyisocyanate or isocyanate-reactive composition with the proviso that no water is added to the polyisocyanate.

In principle every blowing agent known in the art may be used. Of course preferably no CFC blowing agent is used. Blowing agents having a boiling point between -70°C and 0°C and/or water are preferred since it has been found that the combined use of the inert, insoluble, organic liquid with such a blowing agent provides for superior foams and elastomers. In integral skin foams the surface appearance is improved when using these preferred blowing agents; in particular the blowing agents having a boiling point between -70°C and 0°C further give improved skin quality.

Very suitably the blowing agent may be selected amongst the group consisting of CHClF₂, CH₂F₂, CF₃CH₂F, CF₂HCF₂H, CH₃CClF₂, C₂H₄F₂, C₂HF₅, C₂HClF₄ and mixtures thereof. These blowing agents having a boiling point between -70°C and 0°C may be used together with water. Preferably no further blowing agents are used.

Another preferred blowing agent is water alone, which in particular is preferred in preparing flexible foams and microcellular elastomers.

As mentioned before the inert, insoluble, organic liquid preferably is combined with the polyisocyanate or the isocyanate-reactive composition. In order to stabilise this combination to a certain degree it is preferred to employ a surfactant in order to obtain an emulsion of this inert, insoluble, organic liquid in the polyisocyanate or the isocyanate-reactive composition.

Most preferred surfactants are fluorinated surfactants. Examples of such surfactants are fluorinated alkylpolyoxyethylene ethanols, alkylalkoxylates and alkylesters. Examples of useful fluorinated surfactants which are commercially available are Fluorad™ FC 430 and FC 431 from 3M; Forafac™ 1110D, 1157, 1157N and 1199D from Atochem and Fluowet™ S 3690, OTN and CD from Hoechst.

In view of the above the present invention is also concerned with a polyisocyanate and a isocyanate-reactive composition comprising an inert, insoluble, organic liquid having a boiling point of at least 60°C at 1 bar and a surfactant, preferably a fluorinated surfactant.

The amount of surfactant used is 0.02-5 pbw per 100 pbw of foam forming reaction system and 0.05-10 pbw per 100 pbw of polyisocyanate or isocyanate-reactive composition.

The polyisocyanates and isocyanate-reactive compositions for preparing flexible foams, integral skin foams and microcellular elastomers are widely known.

Polyisocyanates which may be used according to the present invention include aliphatic, cycloaliphatic, araliphatic and aromatic polyisocyanates as proposed in the literature for use in the production of such foams and elastomers. Of particular importance are aromatic diisocyanates such as tolylene and diphenylmethane diisocyanate in the well known pure, modified and crude forms, in particular the so-called MDI variants (diphenylmethane diisocyanate modified by the introduction of urethane, allophanate, urea, biuret, carbodiimide, uretonimine or isocyanurate residues) and the mixtures of diphenylmethane diisocyanate(s) and oligomers thereof known in the art as "crude" or "polymeric" MDI (polymethylene polyphenylene polyisocyanates). Preferred polyisocyanates have a number average isocyanate functionality of 2 to below 2.4.

The nature of the isocyanate-reactive compound which may be used in the present invention depends on the type of product to be prepared, i.e. microcellular elastomers, integral skin foams or flexible foams.

Suitable high molecular weight isocyanate-reactive compounds have a molecular weight of 1000 to 10000 preferably 1500-7500 and a number average functionality of 2 to 4, and include polyols, polyamines, imine-functional compounds or enamine-containing compounds and mixtures thereof.

Suitable low molecular weight isocyanate-reactive compounds have a molecular weight of 60 to below 1000 and a number average functionality of 2 to 8 and may be selected among
a) polyols
b) polyamines
c) hydroxy amino compounds
d) imine-functional and/or enamine-containing compounds or mixtures thereof.

For the preparation of flexible foams, isocyanate-reactive compounds, in particular polyols, having a high molecular weight will be used. For the preparation of integral skin foams and microcellular elastomers, mixtures of high and low molecular weight isocyanate-reactive compounds will be generally used.

Polymeric polyols have been fully described in the prior art and include reaction products of alkylene oxides, for example ethylene oxide and/or propylene oxide, with initiators containing a plurality of active hydrogen atoms per molecule. Suitable initiators include water and polyols, for example glycol, propylene glycol and their oligomers, glycerol, trimethylopropane, triethanolamine and pentaerythritol and polyamines, for example ethylene diamine, tolylene diamine, diaminodiphenylmethane and polymethylene polyphenylene polyamines, and aminoalcohols, for example ethanolamine and diethanolamine, and mixtures of such initiators. Other suitable polymeric polyols include polyesters obtained by the condensation of appropriate proportions of glycols and higher functionality polyols with dicarboxylic acids. Still further suitable polymeric polyols include hydroxyl terminated polythioethers, polyamides, polyesteramides, polycarbonates, polyacetals, polyolefins and polysiloxanes.

Polyols having a molecular weight of 62 to below 1000 include simple non-polymeric diols such as ethylene glycol, propylene glycol, dipropylene glycol, tripropylene glycol and 1,4-butanediol.

Polyamines having a molecular weight of 1000-10000 include amino ended polyethers, polyesters, polyesteramides, polycarbonates, polyacetols, polyolefins and polysiloxanes.

Polyamines having a molecular weight of 60 to below 1000 include aliphatic, cycloaliphatic or araliphatic polyamines containing two or more primary and/or secondary amino groups, - such as the low molecular weight amino-ended polyethers -, and aromatic polyamines such as diethyl toluene diamine.

Suitable low molecular weight hydroxy-amino compounds comprise monoethanolamine, diethanolamine and isopropanol amine.

Suitable imino- or enamino functional reactants include those compounds which are derived from the modification of the above described amino-functional compounds, e.g. upon their reaction with an aldehyde or a ketone.

Mixtures of isocyanate-reactive components varying in chemical structure and/or molecular weight and/or functionality may be used if desired.

In addition to the polyisocyanate, isocyanate-reactive composition, blowing agent and insoluble, inert, organic liquid, the foam-forming reaction mixture will commonly contain one or more other conventional auxiliaries or additives. Such optional additives include foam-stabilising agents for example siloxane-oxyalkylene copolymers, urethane catalysts, for example tin compounds such as stannous octoate or dibutylin dilaurate or tertiary amines such as dimethylcyclohexaylamine or triethylene diamine, and fire retardants, for example halogenated alkyl phosphates such as tris chloropropyl phosphate.

In operating the method of the invention, the known one-shot, full-prepolymer or semi-prepolymer techniques may be used together with conventional mixing methods and the foams and elastomers may be produced in the form of mouldings, cavity fillings, sprayed foam, frothed foam or slab stock foams.

The present invention is illustrated by the following examples.

### GLOSSARY

### Isocyanates

- VM 10: A modified MDI composition from ICI PLC, having an NCO value of 26.0 % and a number average functionality of 2.07
- VM 021: A modified MDI composition from ICI PLC, having an NCO value of 23.0 % and a number average functionality of 2.01
- VM 25: A modified MDI composition from ICI PLC, having an NCO value of 24.3 % and a number average functionality of 2.21
- PBA 2082: A modified MDI composition from ICI PLC, having an NCO value of 26.2 % and a number average functionality of 2.19

### Polyols

- T 3275: A polyether triol from ICI PLC, having an OH value of 32 mg KOH/g.
- PA 38: A polyether triol from ICI PLC, having an OH value of 36 mg KOH/g.
- F 3507: A polyether triol from ICI PLC, having an OH value of 35 mg KOH/g.
- MEG: Monoethylene glycol.
- DEG: Diethylene glycol.

### Catalysts

- DABCO™ 33-LV (D 33-LV): A catalyst from Air Products.
- DABCO™ EG: A catalyst from Air Products.
- NIAX™ -A1: A catalyst from Union Carbide.
- DBTDL: Dibutyl-tin-dilaurate.

### Surfactant

- B4113: A silicone surfactant from Goldschmidt.
- FC -431: A fluorinated surfactant from 3M

### Blowing agent

- HCFC-22: Chloro-difluoro-methane

### Example I

Integral skin foams were prepared by using HCFC-22 as blowing agent in combination with an inert, insoluble, organic liquid : perfluoro-2-butyl-tetrahydrofurane (PFB-THF) (boiling point : 98° - 108°C at 1 bar).

The formulations used were as follows :

| A. Isocyanate compositions : | | |
|---|---|---|
| A₁ | PBA 2082 | 100 pbw |
| | PFB-THF | 3 pbw |
| | FC-431 | 0.5 pbw |
| | | |
| A₂ | PBA 2082 | 100 pbw |
| | PFB-THF | 1.5 pbw |
| | FC-431 | 0.025 pbw |

The isocyanate compositions were prepared by emulsifying PFB-THF and FC-431 in the isocyanate by high shear mixing during 2 minutes (Silverson mixer).

| B. Polyol composition : | |
|---|---|
| T 3275 | 100 pbw |
| MEG | 8 pbw |
| D-33 LV | 1 pbw |
| H₂O (non added) | 0.1 pbw |
| HCFC-22 | 5 pbw |

The polyol composition was made by simple mixing.

Integral skin foams - ISF 1 and ISF2 - were prepared by reacting, at an isocyanate index of 100, the polyol composition B with the polyisocyanate compositions A1 and A2 respectively.

### Comparative example

An integral skin foam - ISF_{c} - was prepared by reacting PBA 2082 with polyol composition B at an isocyanate index of 100.

The reactions were performed in a mould after mixing during 10 sec. at 5000 rpm.

The physical properties of the resulting integral skin foams are shown in Table I herebelow.

The integral skin foams prepared according to the present invention showed improved skin properties and a very fine cell structure, as well as improved physical properties.

**TABLE 1**

| Physical properties. | | | | | | | | | |
|---|---|---|---|---|---|---|---|---|---|
| | Demould time, (min.) | Density overall, (kg/m³) | Density core, (kg/m³) | Density skin, (kg/m³) | Shore A hardness, | Indentation hardness, (kg) | Tear strength, (N.m⁻¹) | Tensile strength, (kPa) | Elongation at break, (%) |
| ISF_{c} | 3 | 240 | 190 | 568 | 61 | 8.2 | 2455 | 2045 | 110 |
| ISF₁ | 3 | 253 | 185 | 817 | 68 | 9.3 | 2880 | 2570 | 113 |
| ISF₂ | 3 | 256 | 198 | 818 | 73 | 11.6 | 2985 | 2640 | 122 |

### Example II

Integral skin foams were prepared as described in Example I by using water as blowing agent, in combination with inert, insoluble, organic liquids of different boiling points :
1) perfluoro-2-butyl-tetrahydrofurane (PFB-THF) (b.p. 98° - 108°C at 1 bar)
2) perfluoro-2-propyl-tetrahydrofurane (PFP-THF) (b.p. 80°C at 1 bar)

The polysisocyanate and polyol compositions were made as in example 1 and had the following composition

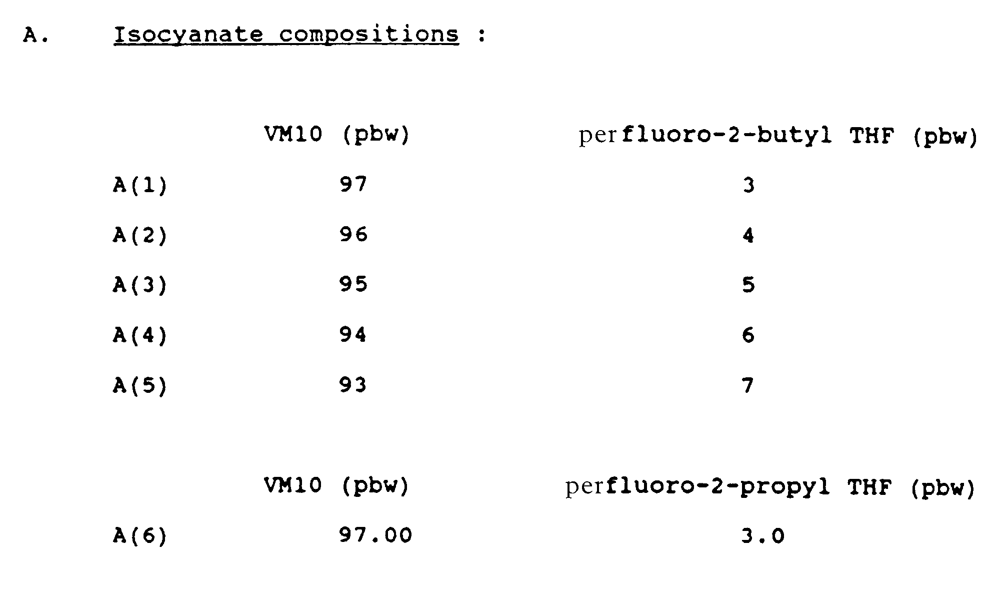

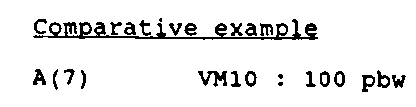

| B. Polyol composition : | |
|---|---|
| T-3275 | 100 pbw |
| MEG | 4.4 |
| DEG | 2.0 |
| H₂O | 0.8 |
| D-33 LV | 0.2 |
| DBTDL | 0.2 |
| Dispersed carbon black | 5.0 |

Integral skin foams ISF₁ to ISE₇ were prepared by reacting the isocyanate composition A₁ to A₇ with the polyol composition, at an isocyanate index of 100, in a mould, upon mixing during 10 sec. at 5000 rpm.

The physical properties of the resulting integral skin foams are shown in Table II herebelow.

The integral skin foams prepared according to the present invention showed improved skin properties and a very fine cell structure, as well as improved physical properties.

**TABLE II**

| Sample | Overall density, (kg.m⁻³) | Core density, (kg.m⁻³) | Short A hardness, | Indentation hardness, (kg) | Tensile strength, (KPa) | Elongation at break, (%) | Tear strength, (N.m⁻¹) |
|---|---|---|---|---|---|---|---|
| ISF(7) (ref.) | 266 | 245 | 28 | 7.5 | 823 | 147 | 4.8 |
| ISF (1) | - | 225 | 25 | 5.9 | 834 | 163 | 4.5 |
| ISF (2) | 256 | 223 | 26 | 6.6 | 885 | 170 | 4.9 |
| ISF (3) | 263 | 238 | 27 | 6.4 | 875 | 162 | 4.6 |
| ISF (4) | 257 | 228 | 26 | 6.6 | 885 | 167 | 4.4 |
| ISF (5) | 256 | 223 | 26 | 6.1 | 880 | 160 | 4.5 |
| ISF (6) | 267 | 243 | 26 | 6.8 | 1018 | 175 | 4.9 |

### Example III

Microcellular elastomers (shoe sole) were prepared by using water as blowing agent, in combination with PFB-THF.
The microcellular elastomers were prepared by using the following ingredients (parts by weight) :

| Composition | IIIₐ | III_{b} | III_{c} |
|---|---|---|---|
| Polyol compositions : | | | |
| PA 38 | 89.13 | 89.13 | 89.13 |
| 1,4-butane diol | 8.50 | 8.50 | 8.50 |
| Dabco EG | 2.00 | 2.00 | 2.00 |
| DBTDL | 0.02 | 0.02 | 0.02 |
| water | 0.35 | 0.35 | 0.35 |
| PFB-THF | - | 1.00 | 2.00 |
| | | | |
| Isocyanate : VM021 | 58 | 57.5 | 57 |
| | | | |
| Free rise density (kg/m³) | 240 | 215 | 195 |

The resulting microcellular elastomers showed reduced densities when prepared in the presence of PFB-THF.

### Example IV

Flexible foams were prepared by using water as blowing agent, in combination with PFP-THF, by using the following formulations (parts are by weight) :

| Composition | IVₐ | IV_{b} | IV_{c} | IV_{d} |
|---|---|---|---|---|
| Polyol compostions : | | | | |
| F-3507 | 100 | 100 | 100 | 100 |
| B 4113 | 0.8 | 0.8 | 0.8 | 0.8 |
| Dabco 33LV | 0.8 | 0.8 | 0.8 | 0.8 |
| Niax-A1 | 0.1 | 0.1 | 0.1 | 0.1 |
| H₂O | 4.5 | 4.5 | 5.0 | 5.0 |
| | | | | |
| Isocyanate : | | | | |
| VM25 | 77 | 77 | 84.5 | 84.5 |
| | | | | |
| perfluoro-2-propyl-THF (emulsified in VM25 as described in Example I) | 0 | 0.5 | 0 | 0.5 |
| | | | | |
| Free rise density (kg/m³) | 55.3 | 52.1 | 52.3 | 52.1 |

Foams prepared with PFP-THF had extremely fine texture and soft feel as judged by tactile examination.

## Claims

1. A method for the preparation of a flexible foam, an integral skin foam or a microcellular elastomer by reacting an organic polyisocyanate and an isocyanate-reactive composition comprising at least one isocyanate-reactive compound having a molecular weight of 1000 to 10000 and a functionality of 2 to 4 in the presence of a blowing agent, characterised in that the reaction is conducted in the presence of an inert, insoluble, organic liquid which has a boiling point of at least 60°C at 1 bar and which is a fluorinated compound selected from the group consisting of fluorinated hydrocarbons, fluorinated ethers, fluorinated tertiary amines, fluorinated amino-ethers and fluorinated sulfones and wherein at least 75% of the hydrogen atoms have been replaced by fluorine atoms wherein
- "Inert" is defined as "showing no reactivity towards the other ingredients of the reaction mixture and especially towards isocyanate-reactive compositions and polyisocyanates, under storage and reaction conditions";
- "Insoluble" is defined as "showing a solubility in the isocyanate-reactive composition and the polyisocyanate of less than 500 ppm by weight at 25°C and 1 bar"; and
- "Liquid" is defined as "liquid under foam-forming conditions and preferably at ambient conditions".

2. A method according to claim 1 wherein the isocyanate-reactive composition also comprises at least one isocyanate-reactive compound having a molecular weight of 60 to below 1000 and a functionality of 2-8.

3. A method according to claims 1 and 2 wherein the blowing agent is water.

4. A method according to claims 1 and 2 wherein the blowing agent comprises a compound having a boiling point of between -70°C and 0°C at 1 bar optionally together with water.

5. A method according to claims 1-4 characterised in that the inert, insoluble, organic liquid has a boiling point of at least 75°C at 1 bar.

6. A method according to claims 1-5 characterised in that the reaction is also conducted in the presence of a surfactant, to stabilise the inert, insoluble, organic liquid in the polyisocyanate or the isocyanate-reactive composition.

7. A method according to claim 6 characterised in that the surfactant is a fluorinated surfactant.

8. A method according to claims 4-7 characterised in that the blowing agent comprises a compound selected from the group consisting of CHClF₂, CH₂F₂, CF₃CH₂F, CF₂HCF₂H, CH₃CClF₂, C₂H₄F₂, C₂HF₅, C₂HClF₄ and mixtures thereof, optionally together with water.

9. An isocyanate-reactive composition comprising :
a) at least one isocyanate-reactive compound of molecular weight of 1000 to 10000 and of functionality of 2 to 4, and
b) an inert, insoluble, organic liquid which has a boiling point of at least 60°C at 1 bar and which is a fluorinated compound selected from the group consisting of fluorinated hydrocarbons, fluorinated ethers, fluorinated tertiary amines, fluorinated amino-ethers and fluorinated sulfones and wherein at least 75% of the hydrogen atoms have been replaced by fluorine atoms wherein
- "Inert" is defined as "showing no reactivity towards the other ingredients of the reaction mixture and especially towards isocyanate-reactive compositions and polyisocyanates, under storage and reaction conditions";
- "Insoluble" is defined as "showing a solubility in the isocyanate-reactive composition and the polyisocyanate of less than 500 ppm by weight at 25°C and 1 bar"; and
- "Liquid" is defined as "liquid under foam-forming conditions and preferably at ambient conditions".

10. A polyisocyanate composition having an isocyanate number average functionality of 2 to below 2.4 and comprising an inert, insoluble, organic liquid having a boiling point of at least 60°C at 1 bar and which is a fluorinated compound selected from the group consisting of fluorinated hydrocarbons, fluorinated ethers, fluorinated tertiary amines, fluorinated amino-ethers and fluorinated sulfones and wherein at least 75% of the hydrogen atoms have been replaced by fluorine atoms wherein
- "Inert" is defined as "showing no reactivity towards the other ingredients of the reaction mixture and especially towards isocyanate-reactive compositions and polyisocyanates, under storage and reaction conditions";
- "Insoluble" is defined as "showing a solubility in the isocyanate-reactive composition and the polyisocyanate of less than 500 ppm by weight at 25°C and 1 bar"; and
- "Liquid" is defined as "liquid under foam-forming conditions and preferably at ambient conditions".

11. An isocyanate-reactive composition according to claim 9 characterised in that the composition further comprises at least one isocyanate-reactive compound having a molecular weight of at least 60 to below 1000 and a functionality of 2-8.

12. An isocyanate-reactive or polyisocyanate composition according to claims 9-11 characterised in that the composition further comprises a blowing agent.

13. An isocyanate-reactive or polyisocyanate composition according to claim 12 characterised in that the blowing agent comprises a compound having a boiling point of between -70°C to 0°C at 1 bar.

14. An isocyanate-reactive or polyisocyanate composition according to claim 13 characterised in that the blowing agent having a boiling point of between -70°C to 0°C is selected from the group consisting of CHClF₂, CH₂F₂, CF₃CH₂F, CF₂HCF₂H, CH₃CClF₂, C₂H₄F₂, C₂HF₅, C₂HClF₄ and mixtures thereof.

15. An isocyanate-reactive or polyisocyanate composition according to claims 9-14 characterised in that the inert, insoluble, organic liquid has a boiling point of at least 75°C at 1 bar.

16. An isocyanate-reactive or polyisocyanate composition according to claims 9-15 characterised in that the composition further comprises a surfactant, to stabilise the inert, insoluble, organic liquid in the polyisocyanate or the isocyanate-reactive composition.

17. An isocyanate-reactive or polyisocyanate composition according to claim 16 characterised in that the surfactant is a fluorinated surfactant.

18. An isocyanate-reactive composition according to claim 12 characterised in that the blowing agent is water optionally together with a blowing agent having a boiling point of between -70°C to 0°C at 1 bar.

## Patentansprüche

1. Verfahren für die Herstellung eines Weichschaumstoffes, eines Integralschaumstoffes oder eines mikrozellularen Elastomers durch die Umsetzung eines organischen Polyisocyanats und einer isocyanat-reaktiven Zusammensetzung, die mindestens eine isocyanat-reaktive Verbindung mit einem Molekulargewicht von 1000 bis 10000 und einer Funktionalität von 2 bis 4 aufweist, in Gegenwart eines Treibmittels,
**dadurch gekennzeichnet, daß**
die Umsetzung in Gegenwart einer inerten, unlöslichen, organischen Flüssigkeit durchgeführt wird, die bei 1 bar einen Siedepunkt von mindestens 60 °C aufweist und eine fluorierte Verbindung ist, die aus der Gruppe bestehend aus fluorierten Kohlenwasserstoffen, fluorierten Ethern, fluorierten tertiären Aminen, fluorierten Aminoethern und fluorierten Sulfonen ausgewählt ist, und in der mindestens 75% der Wasserstoffatome durch Fluoratome ersetzt wurden, wobei
- "inert" als "zeigt gegenüber den anderen Bestandteilen der Reaktionsmischung und insbesondere gegenüber den isocyanat-reaktiven Zusammensetzungen und Polyisocyanaten unter Lager- und Reaktionsbedingungen keine Reaktion" definiert ist;
- "unlöslich" als "zeigt in der isocyanat-reaktiven Zusammensetzung und dem Polyisocyanat bei 25 °C und 1 bar eine Löslichkeit von weniger als 500 Gewichtsteilen je einer Million Gewichtsteile" definiert ist; und
- "Flüssigkeit" als "Flüssigkeit unter Bedingungen der Schaumstoffbildung und bevorzugt bei Umgebungsbedingungen" definiert ist.

2. Verfahren nach Anspruch 1,
**dadurch gekennzeichnet, daß**
die isocyanat-reaktive Zusammensetzung auch mindestens eine isocyanat-reaktive Verbindung mit einem Molekulargewicht von 60 bis unter 1000 und einer Funktionalität von 2 bis 8 umfaßt.

3. Verfahren nach Anspruch 1 und Anspruch 2,
**dadurch gekennzeichnet, daß**
das Treibmittel aus Wasser besteht.

4. Verfahren nach Anspruch 1 und Anspruch 2,
**dadurch gekennzeichnet, daß**
das Treibmittel eine Verbindung, die bei 1 bar einen Siedepunkt zwischen -70 °C und 0 °C aufweist, wahlweise zusammen mit Wasser, umfaßt.

5. Verfahren nach den Ansprüchen 1 bis 4,
**dadurch gekennzeichnet, daß**
die inerte, unlösliche, organische Flüssigkeit bei 1 bar einen Siedepunkt von mindestens 75 °C aufweist.

6. Verfahren nach den Ansprüchen 1 bis 5,
**dadurch gekennzeichnet, daß**
die Reaktion auch in Gegenwart eines grenzflächenaktiven Mittels durchgeführt wird, um die inerte, unlösliche, organische Flüssigkeit in der Polyisocyanat- oder der isocyanat-reaktiven Zusammensetzung zu stabilisieren.

7. Verfahren nach Anspruch 6,
**dadurch gekennzeichnet, daß**
das grenzflächenaktive Mittel aus einem fluorierten grenzflächenaktiven Mittel besteht.

8. Verfahren nach den Ansprüchen 4 bis 7,
**dadurch gekennzeichnet, daß**
das Treibmittel eine Verbindung, die aus der Gruppe bestehend aus CHClF₂, CH₂F₂, CF₃CH₂F, CF₂HCF₂H, CH₃CClF₂, C₂H₄F₂, C₂HF₅, C₂HClF₄ und Mischungen davon ausgewählt ist, wahlweise zusammen mit Wasser, umfaßt.

9. Isocyanat-reaktive Zusammensetzung, die die nachstehenden Bestandteile umfaßt:
a) mindestens eine isocyanat-reaktive Verbindung mit einem Molekulargewicht von 1000 bis 10000 und einer Funktionalität von 2 bis 4, und
b) eine inerte, unlösliche, organische Flüssigkeit, die bei 1 bar einen Siedepunkt von mindestens 60 °C aufweist und eine fluorierte Verbindung ist, die aus der Gruppe bestehend aus fluorierten Kohlenwasserstoffen, fluorierten Ethern, fluorierten tertiären Aminen, fluorierten Aminoethern und fluorierten Sulfonen ausgewählt ist, und in der mindestens 75% der Wasserstoffatome durch Fluoratome ersetzt wurden, wobei
- "inert" als "zeigt gegenüber den anderen Bestandteilen der Reaktionsmischung und insbesondere gegenüber den isocyanat-reaktiven Zusammensetzungen und Polyisocyanaten unter Lager- und Reaktionsbedingungen keine Reaktion" definiert ist;
- "unlöslich" als "zeigt in der isocyanat-reaktiven Zusammensetzung und dem Polyisocyanat bei 25 °C und 1 bar eine Löslichkeit von weniger als 500 Gewichtsteilen je einer Million Gewichtsteile" definiert ist; und
- "Flüssigkeit" als "Flüssigkeit unter Bedingungen der Schaumstoffbildung und bevorzugt bei Umgebungsbedingungen" definiert ist.

10. Polyisocyanatzusammensetzung mit einem Zahlenmittel der Isocyanatfunktionalität von 2 bis unter 2,4, die eine inerte, unlösliche, organische Flüssigkeit umfaßt, die bei 1 bar einen Siedepunkt von mindestens 60 °C aufweist und eine fluorierte Verbindung ist, die aus der Gruppe bestehend aus fluorierten Kohlenwasserstoffen, fluorierten Ethern, fluorierten tertiären Aminen, fluorierten Aminoethern und fluorierten Sulfonen ausgewählt ist, und in der mindestens 75% der Wasserstoffatome durch Fluoratome ersetzt wurden, wobei
- "inert" als "zeigt gegenüber den anderen Bestandteilen der Reaktionsmischung und insbesondere gegenüber den isocyanat-reaktiven Zusammensetzungen und Polyisocyanaten unter Lager- und Reaktionsbedingungen keine Reaktion" definiert ist;
- "unlöslich" als "zeigt in der isocyanat-reaktiven Zusammensetzung und dem Polyisocyanat bei 25 °C und 1 bar eine Löslichkeit von weniger als 500 Gewichtsteilen je einer Million Gewichtsteile" definiert ist; und
- "Flüssigkeit" als "Flüssigkeit unter Bedingungen der Schaumstoffbildung und bevorzugt bei Umgebungsbedingungen" definiert ist.

11. Isocyanat-reaktive Zusammensetzung nach Anspruch 9,
**dadurch gekennzeichnet, daß**
die Zusammensetzung ferner mindestens eine isocyanat-reaktive Verbindung mit einem Molekulargewicht von mindestens 60 bis unter 1000 und einer Funktionalität von 2 bis 8 umfaßt.

12. Isocyanat-reaktive oder Polyisocyanatzusammensetzung nach den Ansprüchen 9 bis 11,
**dadurch gekennzeichnet, daß**
die Zusammensetzung ferner ein Treibmittel umfaßt.

13. Isocyanat-reaktive oder Polyisocyanatzusammensetzung nach Anspruch 12,
**dadurch gekennzeichnet, daß**
das Treibmittel eine Verbindung umfaßt, die bei 1 bar einen Siedepunkt zwischen -70 °C und 0 °C aufweist.

14. Isocyanat-reaktive oder Polyisocyanatzusammensetzung nach Anspruch 13,
**dadurch gekennzeichnet, daß**
das Treibmittel mit einem Siedepunkt zwischen -70 °C bis 0 °C aus der Gruppe bestehend aus CHClF₂, CH₂F₂, CF₃CH₂F, CF₂HCF₂H, CH₃CClF₂, C₂H₄F₂, C₂HF₅, C₂HClF₄ und Mischungen davon ausgewählt ist.

15. Isocyanat-reaktive oder Polyisocyanatzusammensetzung nach den Ansprüchen 9 bis 14,
**dadurch gekennzeichnet, daß**
die inerte, unlösliche, organische Flüssigkeit bei 1 bar einen Siedepunkt von mindestens 75 °C aufweist.

16. Isocyanat-reaktive oder Polyisocyanatzusammensetzung nach den Ansprüchen 9 bis 15,
**dadurch gekennzeichnet, daß**
die Zusammensetzung ferner ein grenzflächenaktives Mittel umfaßt, um die inerte, unlösliche, organische Flüssigkeit in der Polyisocyanat- oder der isocyanat-reaktiven Zusammensetzung zu stabilisieren.

17. Isocyanat-reaktive oder Polyisocyanatzusammensetzung nach Anspruch 16,
**dadurch gekennzeichnet, daß**
das grenzflächenaktive Mittel aus einem fluorierten grenzflächenaktiven Mittel besteht.

18. Isocyanat-reaktive Zusammensetzung nach Anspruch 12,
**dadurch gekennzeichnet, daß**
das Treibmittel aus Wasser, wahlweise zusammen mit einem Treibmittel mit einem Siedepunkt bei 1 bar zwischen -70 °C und 0 °C, besteht.

## Revendications

1. Procédé pour la préparation d'une mousse flexible, d'une mousse à peau intégrée ou d'un élastomère microcellulaire par réaction d'un polyisocyanate organique et d'une composition, réactive avec les isocyanates, comprenant au moins un composé, réactif avec les isocyanates, ayant un poids moléculaire de 1000 à 10 000 et une fonctionnalité de 2 à 4 en présence d'un agent porogène, caractérisé en ce que la réaction est conduite en présence d'un liquide organique inerte insoluble qui a un point d'ébullition d'au moins 60°C sous une pression de 1 bar et qui est un composé fluoré choisi dans le groupe consistant en hydrocarbures fluorés, éthers fluorés, amines tertiaires fluorées, amino-éthers fluorés et sulfones fluorées et dans lequel au moins 75 % des atomes d'hydrogène ont été remplacés par des atomes de fluor, procédé dans lequel
- le terme "inerte" signifie "ne présentant aucune réactivité vis-à-vis des autres ingrédients du mélange réactionnel et notamment vis-à-vis des compositions réactives avec les isocyanates et des polyisocyanates, dans les conditions de stockage et de réaction" ;
- le terme "insoluble" signifie "présentant une solubilité dans la composition réactive avec les isocyanates et le polyisocyanate inférieure à 500 ppm en poids à 25°C et sous une pression de 1 bar" ; et
- le terme "liquide" signifie "liquide dans les conditions de formation de mousse et de préférence dans les conditions ambiantes".

2. Procédé suivant la revendication 1, dans lequel la composition réactive avec les isocyanates comprend également au moins un composé réactif avec les isocyanates ayant un poids moléculaire de 60 à moins de 1000 et une fonctionnalité de 2 à 8.

3. Procédé suivant les revendications 1 et 2, dans lequel l'agent porogène est l'eau.

4. Procédé suivant les revendications 1 et 2, dans lequel l'agent porogène comprend un composé ayant un point d'ébullition compris dans l'intervalle de -70°C à 0°C sous une pression de 1 bar, facultativement en association avec de l'eau.

5. Procédé suivant les revendications 1 à 4, caractérisé en ce que le liquide organique inerte insoluble a un point d'ébullition d'au moins 75°C sous une pression de 1 bar.

6. Procédé suivant les revendications 1 à 5, caractérisé en ce que la réaction est également conduite en présence d'un surfactant, pour stabiliser le liquide organique inerte insoluble dans le polyisocyanate ou la composition réactive avec les isocyanates.

7. Procédé suivant la revendication 6, caractérisé en ce que le surfactant est un surfactant fluoré.

8. Procédé suivant les revendications 4 à 7, caractérisé en ce que l'agent porogène comprend un composé choisi dans le groupe consistant en CHClF₂, CH₂F₂, CF₃CH₂F, CF₂HCF₂H, CH₃CClF₂, C₂H₄F₂, C₂HF₅, C₂HClF₄ et leurs mélanges, facultativement en association avec de l'eau.

9. Composition réactive avec les isocyanates, comprenant :
a) au moins un composé, réactif avec les isocyanates, ayant un poids moléculaire de 1000 à 10 000 et une fonctionnalité de 2 à 4,
b) un liquide organique inerte insoluble qui a un point d'ébullition d'au moins 60°C sous une pression de 1 bar et qui est un composé fluoré choisi dans le groupe consistant en hydrocarbures fluorés, éthers fluorés, amines tertiaires fluorées, amino-éthers fluorés et sulfones fluorées, et dans lequel au moins 75 % des atomes d'hydrogène ont été remplacés par des atomes de fluor, composition dans laquelle
- le terme "inerte" signifie "ne présentant aucune réactivité vis-à-vis des autres ingrédients du mélange réactionnel et notamment vis-à-vis des compositions réactives avec les isocyanates et des polyisocyanates, dans les conditions de stockage et de réaction" ;
- le terme "insoluble" signifie "présentant une solubilité dans la composition réactive avec les isocyanates et le polyisocyanate inférieure à 500 ppm en poids à 25°C et sous une pression de 1 bar" ; et
- le terme "liquide" signifie "liquide dans les conditions de formation de mousse et de préférence dans les conditions ambiantes".

10. Composition de polyisocyanate ayant une fonctionnalité moyenne numérique d'isocyanate de 2 à moins de 2,4 et comprenant un liquide organique inerte, insoluble, ayant un point d'ébullition d'au moins 60°C sous une pression de 1 bar et qui est un composé fluoré choisi dans le groupe consistant en hydrocarbures fluorés, éthers fluorés, amines tertiaires fluorées, amino-éthers fluorés et sulfones fluorées et dans lequel au moins 75 % des atomes d'hydrogène ont été remplacés par des atomes de fluor, composition dans laquelle
- le terme "inerte" signifie "ne présentant aucune réactivité vis-à-vis des autres ingrédients du mélange réactionnel et notamment vis-à-vis des compositions réactives avec les isocyanates et des polyisocyanates, dans les conditions de stockage et de réaction" ;
- le terme "insoluble" signifie "présentant une solubilité dans la composition réactive avec les isocyanates et le polyisocyanate inférieure à 500 ppm en poids à 25°C et sous une pression de 1 bar" ; et
- le terme "liquide" signifie "liquide dans les conditions de formation de mousse et de préférence dans les conditions ambiantes".

11. Composition réactive avec les isocyanates suivant la revendication 9, caractérisée en ce qu'elle comprend en outre au moins un composé, réactif avec les isocyanates, ayant un poids moléculaire d'au moins 60 à moins de 1000 et une fonctionnalité de 2 à 8.

12. Composition réactive avec les isocyanates ou composition de polyisocyanate suivant les revendications 9 à 11, caractérisée en ce qu'elle comprend en outre un agent porogène.

13. Composition réactive avec les isocyanates ou composition de polyisocyanate suivant la revendication 12, caractérisée en ce que l'agent porogène comprend un composé ayant un point d'ébullition compris dans l'intervalle de -70°C à 0°C sous une pression de 1 bar.

14. Composition réactive avec les isocyanates ou composition de polyisocyanate suivant la revendication 13, caractérisée en ce que l'agent porogène ayant un point d'ébullition compris dans l'intervalle de -70°C à 0°C est choisi dans le groupe consistant en CHClF₂, CH₂F₂, CF₃CH₂F, CF₂HCF₂H, CH₃CClF₂, C₂H₄F₂, C₂HF₅, C₂HClF₄ et leurs mélanges.

15. Composition réactive avec les isocyanates ou composition de polyisocyanate suivant les revendications 9 à 14, caractérisée en ce que le liquide organique inerte insoluble a un point d'ébullition d'au moins 75°C sous une pression de 1 bar.

16. Composition réactive avec les isocyanates ou composition de polyisocyanate suivant les revendications 9 à 15, caractérisée en ce qu'elle comprend en outre un surfactant pour stabiliser le liquide organique inerte insoluble dans la composition de polyisocyanate ou composition réactive avec les isocyanates.

17. Composition réactive avec les isocyanates ou composition de polyisocyanate suivant la revendication 16, caractérisée en ce que le surfactant est un surfactant fluoré.

18. Composition réactive avec les isocyanates suivant la revendication 12, caractérisée en ce que l'agent porogène consiste en eau facultativement en association avec un agent porogène ayant un point d'ébullition compris dans l'intervalle de -70°C à 0°C sous une pression de 1 bar.
